# EUROPÄISCHE PATENTANMELDUNG

(11) **EP 4 659 560 A1**
(43) Veröffentlichungstag der Anmeldung: **10.12.2025**
(21) Anmeldenummer: 24180850.0
(22) Anmeldetag: 07.06.2024
(51) Int. Cl.: A01D 34/73

(54) **MÄHWERK SOWIE RASENMÄHER UND/ODER FREISCHNEIDER**

(71) Anmelder: Andreas Stihl AG & Co. KG, 71336 Waiblingen (DE)
(72) Erfinder: Keller, Sven, 73663 Berglen (DE); Elfner, Jörg, 72119 Ammerbuch (DE); Gerk, Nikolai, 36137 Großenlüder (DE)
(74) Vertreter: Patentanwälte Ruff, Wilhelm, Beier, Dauster & Partner mbB

(57) **Zusammenfassung**

Die Erfindung betrifft ein Mähwerk (1) für einen Rasenmäher (50) und/oder für einen Freischneider (60), wobei das Mähwerk (1) aufweist: einen Werkzeugträger (2), der zur Rotation um eine Antriebsachse (3) des Mähwerks (1) ausgebildet ist und der eine Trägerbasis (4) sowie eine der Trägerbasis (4) in einer Axialrichtung (A) der Antriebsachse (3) gegenüberliegende Strömungsleiteinrichtung (5) aufweist, wobei die Trägerbasis (4) und die Strömungsleiteinrichtung (5) gemeinsam wenigstens einen Hohlraum (6) des Werkzeugträgers (2) bilden, wobei bei Rotation des Werkzeugträgers (2) um die Antriebsachse (3) ein Teil eines den Werkzeugträger (2) umgebenden Umgebungsfluides (F) durch den Hohlraum (6) hindurchströmt, und wenigstens eine Lagerstelle (B), die zur Lagerung einer Werkzeugeinrichtung (7) ausgebildet und zumindest teilweise innerhalb des Hohlraums (6) angeordnet ist.

## Beschreibung

### ANWENDUNGSGEBIET UND STAND DER TECHNIK

Die Erfindung betrifft ein Mähwerk für einen Rasenmäher und/oder für einen Freischneider. Die Erfindung betrifft zudem einen Rasenmäher mit einem derartigen Mähwerk und/oder einen Freischneider mit einem derartigen Mähwerk.

### AUFGABE UND LÖSUNG

Es ist eine Aufgabe der vorliegenden Erfindung, ein Mähwerk für einen Rasenmäher und/oder für einen Freischneider sowie einen Rasenmäher mit einem derartigen Mähwerk und/oder einen Freischneider mit einem derartigen Mähwerk zu schaffen, die jeweils verbesserte Eigenschaften aufweisen. Insbesondere soll ein besonders geringer, insbesondere manueller, Reinigungs- und/oder Wartungsaufwand des Mähwerks erreicht werden.

Diese Aufgabe wird gelöst durch die Gegenstände der unabhängigen Patentansprüche. Bevorzugte Ausführungsformen sind Gegenstand der abhängigen Patentansprüche.

Ein erfindungsgemäßes Mähwerk ist für einen Rasenmäher und/oder eine Motorsense ausgebildet. Das Mähwerk kann entsprechend für einen Rasenmäher und/oder für einen Freischneider konfiguriert und/oder vorgesehen sein. Insbesondere kann das Mähwerk in einem Rasenmäher und/oder in einem Freischneider verwendet werden. Insbesondere kann der Rasenmäher ein, insbesondere autonomer mobiler, Rasenmähroboter sein. Der Rasenmähroboter kann synonym als Roboterrasenmäher bezeichnet werden. Zusätzlich oder alternativ kann der Freischneider als Motorsense, Grastrimmer und/oder Rasentrimmer bezeichnet werden.

Das erfindungsgemäße Mähwerk weist einen Werkzeugträger auf, welcher zur Rotation um eine Antriebsachse des Mähwerks ausgebildet ist. Die Antriebsachse weist eine Axialrichtung auf. Insbesondere ist eine Längserstreckung der Antriebsachse parallel zu der Axialrichtung. Der Werkzeugträger weist eine Trägerbasis sowie eine Strömungsleiteinrichtung auf, wobei die Strömungsleiteinrichtung der Trägerbasis in der Axialrichtung gegenüberliegend angeordnet ist. Dabei bilden die Trägerbasis und die Strömungsleiteinrichtung gemeinsam wenigstens einen Hohlraum des Werkzeugträgers. Der Hohlraum kann entlang der Axialrichtung der Antriebsachse zwischen der Strömungsleiteinrichtung und der Trägerbasis angeordnet sein. Abseits des Hohlraums können die Trägerbasis und die Strömungsleiteinrichtung einander zumindest bereichsweise, insbesondere ausschließlich bereichsweise, berühren. Bei Rotation des Werkzeugträgers um die Antriebsachse strömt ein Teil eines Umgebungsfluides, welches den Werkzeugträger umgibt, durch den Hohlraum hindurch. Mit anderen Worten: Die Trägerbasis und die Strömungsleiteinrichtung können gemeinsam den wenigstens einen Hohlraum des Werkzeugträgers derart definieren und/oder begrenzen, dass - bei Rotation des Werkzeugträgers um die Antriebsachse - ein Teil des den Werkzeugträger umgebenden Umgebungsfluides durch den Hohlraum hindurchströmt. Insbesondere sind die Trägerbasis und die Strömungsleiteinrichtung so ausgebildet und/oder aufeinander abgestimmt, dass - bei Rotation des Werkzeugträgers um die Antriebsachse - ein Teil des den Werkzeugträger umgebenden Umgebungsfluides durch den Hohlraum hindurchströmt. Das Mähwerk weist wenigstens eine Lagerstelle auf, die zur, insbesondere lösbaren, mehr insbesondere werkzeugfrei lösbaren, Lagerung einer Werkzeugeinrichtung ausgebildet ist. Die Lagerstelle und/oder eine dort gelagerte Werkzeugeinrichtung ist zumindest teilweise innerhalb des Hohlraums angeordnet. Insbesondere ist die Werkzeugeinrichtung zum Schneiden von Gras ausgebildet.

Das bei Rotation des Werkzeugträgers um die Antriebsachse durch den Hohlraum hindurchströmende Umgebungsfluid kann die wenigstens eine Lagerstelle und/oder die dort gelagerte Werkzeugeinrichtung an- und/oder umströmen. Auf diese Weise kann die Lagerstelle mittels des gegen sie und/oder um sie herumgeführten Umgebungsfluides im Betrieb des Mähwerks selbsttätig gereinigt werden. Insbesondere kann eine unerwünschte Anhaftung von Schnittgut an der Lagerstelle und/oder der dort gelagerten Werkzeugeinrichtung vermindert oder sogar vollständig vermieden werden. Dies kann einen Reinigungsaufwand und/oder einen Wartungsaufwand des Mähwerks, insbesondere der Lagerstelle und/oder der dort gelagerten Werkzeugeinrichtung, vorteilhaft reduzieren.

Die Begriffe "umfassen" oder "haben" können untereinander und für den Begriff "aufweisen" synonym verwendet werden.

Die Formulierung "- sowie alternativ oder zusätzlich -" kann im vorliegenden Zusammenhang durch die Formulierung "und/oder" gleichbedeutend ersetzt werden, und umgekehrt.

Die Begriffe "positionieren" und "verstellen" und "versetzen" können untereinander und für den Begriff "bewegen" synonym verwendet werden.

Das Umgebungsfluid kann Luft sein. Es ist aber auch denkbar, dass das Umgebungsfluid ein Gemisch mit Luft und mit Flüssigkeit ist. Insbesondere kann ein solches Gemisch erzeugt werden, indem Flüssigkeit der Umgebungsluft, beispielsweise mittels wenigstens einer Sprühdüseneinrichtung eines das Mähwerk aufweisenden Rasenmähers und/oder Freischneiders, beigemischt wird.

Die Werkzeugeinrichtung kann eine Schneidmessereinrichtung, insbesondere ein Schneidmesser, insbesondere mit mindestens einer Schneidklinge, aufweisen und/oder sein.

Die Werkzeugeinrichtung kann dazu ausgebildet sein, Gras im sogenannten Freischnittverfahren ohne Gegenwerkzeugeinrichtung, insbesondere Gegenschneide, zu schneiden.

Die Werkzeugeinrichtung kann ein Werkzeugelement sein.

Die Werkzeugeinrichtung kann einstückig ausgebildet sein.

Zweckmäßig kann die Werkzeugeinrichtung an der Lagerstelle derart gelagert werden, dass die Werkzeugeinrichtung teilweise aus dem Hohlraum heraus nach außen ragt. Insbesondere kann die Werkzeugeinrichtung derart an der Lagerstelle gelagert werden, dass die Werkzeugeinrichtung bezüglich der Axialrichtung der Antriebsachse radial aus dem Hohlraum nach außen ragt. Die Werkzeugeinrichtung kann derart in radialem Abstand zu der Antriebsachse an dem Werkzeugträger gelagert sein, dass - bei Rotation des Werkzeugträgers um die Antriebsachse - durch den Hohlraum hindurchströmendes Umgebungsfluid die Werkzeugeinrichtung selbstreinigend umströmt.

In Ausgestaltung der Erfindung weist die Strömungsleiteinrichtung wenigstens einen Flügelbereich auf, welcher den Hohlraum entlang einer Umfangsrichtung des Mähwerks überspannt. Insbesondere ist der, insbesondere jeweilige, Flügelbereich tragflächenartig profiliert und/oder gewölbt. Die Strömungsleiteinrichtung kann je Hohlraum einen Flügelbereich aufweisen. Der, insbesondere jeweilige, Flügelbereich kann sich radial in Bezug auf die Axialrichtung nach außen verjüngen. Der Hohlraum kann eine, insbesondere in einem parallel zu der Axialrichtung geführten Schnitt, in etwa halbelliptische und/oder polygonale Querschnittsfläche aufweisen.

In weiterer Ausgestaltung der Erfindung weist wenigstens ein, insbesondere jeder, Flügelbereich der Strömungsleiteinrichtung wenigstens eine Durchgangsöffnung auf. Die Durchgangsöffnung kann axial, d. h. entlang der Axialrichtung der Antriebsachse, ausgenommen sein. Die Durchgangsöffnung kann an einem relativ zu der Umfangsrichtung des Mähwerks angestellten Oberflächenbereich des Flügelbereichs vorhanden sein. Der Hohlraum kommuniziert mittels der Durchgangsöffnung derart mit einer äußeren Umgebung des Mähwerks, dass - bei Rotation des Werkzeugträgers um die Antriebsachse - Umgebungsfluid durch die Durchgangsöffnung hindurch in den Hohlraum hineinströmt. Die Durchgangsöffnung kann einen asymmetrischen oder einen symmetrischen Öffnungsumriss aufweisen.

In weiterer Ausgestaltung der Erfindung weist der, insbesondere jeweilige, Flügelbereich wenigstens zwei Durchgangsöffnungen auf. Die wenigstens zwei Durchgangsöffnungen des Flügelbereichs sind entlang der Umfangsrichtung in einem Abstand zueinander angeordnet, um - von einem Drehsinn der Rotation des Werkzeugträgers um die Antriebsachse unabhängig - Umgebungsfluid in den Hohlraum hineinzuführen. Zweckmäßig können die wenigstens zwei Durchgangsöffnungen bezogen auf eine die Antriebsachse enthaltende Symmetrieebene des Flügelbereichs im Wesentlichen spiegelsymmetrisch zueinander ausgebildet sein.

Zweckmäßig kann die Werkzeugeinrichtung im Bereich der Lagerstelle innerhalb des Hohlraums entlang der Umfangsrichtung des Mähwerks im Abstand zu wenigstens einer Durchgangsöffnung des Flügelbereichs der Strömungsleiteinrichtung an dem Werkzeughalter derart gelagert werden, dass - bei Rotation des Werkzeugträgers um die Antriebsachse - Umgebungsfluid durch die Durchgangsöffnung hindurch in den Hohlraum hinein und dort auf die Werkzeugeinrichtung strömt.

In weiterer Ausgestaltung der Erfindung ist der Hohlraum derart geöffnet, dass - bei Rotation des Werkzeugträgers um die Antriebsachse - Umgebungsfluid aus dem Hohlraum herausströmt. Insbesondere ist der Hohlraum bezüglich der Axialrichtung der Antriebsachse radial geöffnet, so dass bei Rotation des Werkzeugträgers um die Antriebsachse Umgebungsfluid radial aus dem Hohlraum nach außen herausströmt. Alternativ oder zusätzlich kann die Werkzeugeinrichtung radial aus dem Hohlraum herausragen.

In weiterer Ausgestaltung der Erfindung weist wenigstens ein Flügelbereich der Strömungsleiteinrichtung eine entlang der Umfangsrichtung des Mähwerks erstreckte Leitfinne auf. Die Leitfinne dient zum radialen Leiten von Umgebungsfluid. Die Leitfinne kann von dem Hohlraum weg weisend axial abstehen. Die Leitfinne kann, insbesondere direkt, an einem Außenumfang der Strömungsleiteinrichtung angeordnet sein. Insbesondere läuft die Leitfinne entlang der Umfangsrichtung nicht vollständig und/oder nur, insbesondere genau, flügelbereichsweise um.

In weiterer Ausgestaltung der Erfindung ist die Werkzeugeinrichtung schwenkbar und/oder zentrifugal selbstausrichtend an dem Werkzeugträger lagerbar oder gelagert. Insbesondere ist die Werkzeugeinrichtung um eine von der Antriebsachse verschiedene und/oder zu der Antriebsachse achsparallel verlaufende Schwenkachse schwenkbar sowie - alternativ oder zusätzlich - zentrifugal selbstausrichtend an dem Werkzeugträger lagerbar oder gelagert.

Zweckmäßig weist der Werkzeugträger wenigstens eine Befestigungseinrichtung zur lösbaren axial formschlüssigen Befestigung der Strömungsleiteinrichtung an der Trägerbasis auf. Dabei ist die Trägerbasis und/oder die Strömungsleiteinrichtung relativ zu der Befestigungseinrichtung radial versetzbar, um die axial formschlüssige Befestigung zu lösen, insbesondere zu entriegeln. Insbesondere sind die Trägerbasis und die Strömungsleiteinrichtung mittels der Befestigungseinrichtung bezüglich der Axialrichtung lösbar drehfest aneinander befestigbar, insbesondere verriegelbar.

Zweckmäßig bildet die Befestigungseinrichtung eine Lagereinrichtung des Werkzeugträgers aus, welcher zum Lagern der Werkzeugeinrichtung dient. Die Lagereinrichtung kann die Lagerstelle des Mähwerks, insbesondere zumindest teilweise oder vollständig, ausbilden. Insbesondere weist die Lagereinrichtung einen Lagerbolzenabschnitt zum Lagern der Werkzeugeinrichtung und einen radial von dem Lagerbolzenabschnitt abstehenden Formschlussabschnitt für die lösbare axial formschlüssige Befestigung der Strömungsleiteinrichtung an der Trägerbasis auf. Der Lagerbolzenabschnitt kann zum Durchragen einer komplementären Durchgangsöffnung der Werkzeugeinrichtung ausgebildet sein, insbesondere so dass die Werkzeugeinrichtung um den Lagerbolzenabschnitt schwenkbeweglich gelagert ist.

Zweckmäßig ist die, insbesondere jeweilige, Lagereinrichtung einstückig ausgebildet sein.

In weiterer Ausgestaltung der Erfindung weist das Mähwerk zwei oder mehr, insbesondere drei, Lagerstellen auf, die entlang der Umfangsrichtung des Mähwerks, insbesondere äquidistant, in einem Abstand zueinander angeordnet sind, um jeweils eine Werkzeugeinrichtung an dem Werkzeugträger zu lagern. Insbesondere weist das Mähwerk dabei je Lagerstelle einen separaten Hohlraum auf.

Ein erfindungsgemäßer Rasenmäher und/oder Freischneider weist ein erfindungsgemäßes Mähwerk wie voranstehend beschrieben auf. Die vorstehend erläuterten Vorteile des erfindungsgemäßen Mähwerks übertragen sich somit auch auf den erfindungsgemäßen Rasenmäher und/oder Freischneider. Der Rasenmäher und/oder Freischneider hat eine Antriebseinrichtung, die zum Rotieren des Werkzeugträgers um die Antriebsachse ausgebildet ist. Das Mähwerk kann eine Nabeneinrichtung zur Kopplung mit einer Antriebswelle aufweisen. Die Antriebswelle kann von der Antriebseinrichtung des Rasenmähers und/oder Freischneiders aufgewiesen sein.

### KURZBESCHREIBUNG DER ZEICHNUNGEN

Weitere Vorteile und Merkmale der Erfindung ergeben sich aus den Ansprüchen sowie aus der nachfolgenden Beschreibung eines bevorzugten Ausführungsbeispiels der Erfindung, welches anhand der Zeichnungen dargestellt ist. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

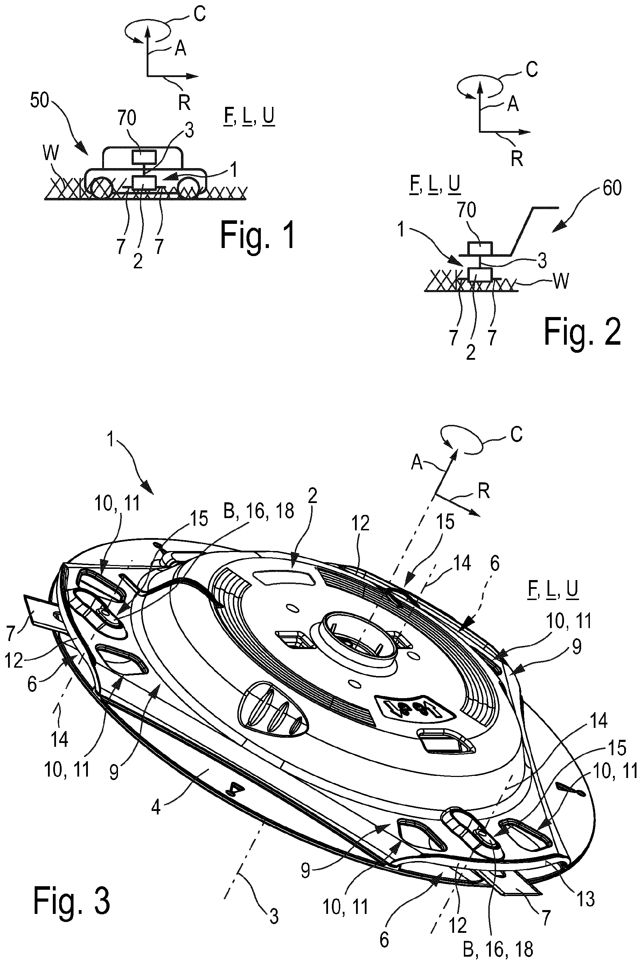

- Fig. 1: zeigt in grob schematischer Schnittdarstellung eine Ausführungsform eines erfindungsgemäßen Rasenmähers,
- Fig. 2: in grob schematischer Schnittdarstellung eine Ausführungsform eines erfindungsgemäßen Freischneiders,
- Fig. 3: in schematischer Perspektivdarstellung eine Ausführungsform eines erfindungsgemäßem Mähwerks für den Rasenmäher nach Fig. 1 und/oder für den Freischneider nach Fig. 2,

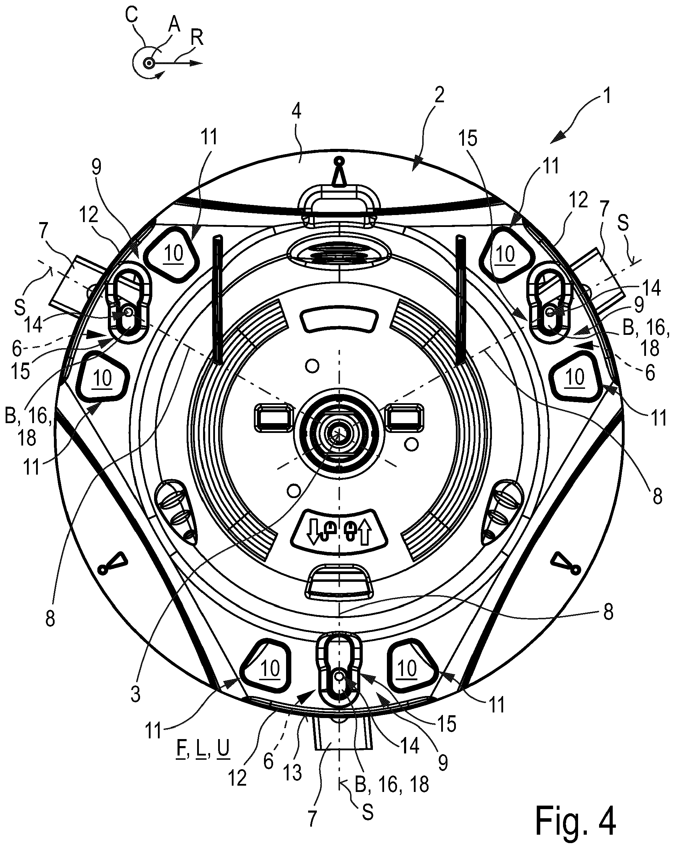

- Fig. 4: in schematischer Draufsicht das Mähwerk nach Fig. 3,

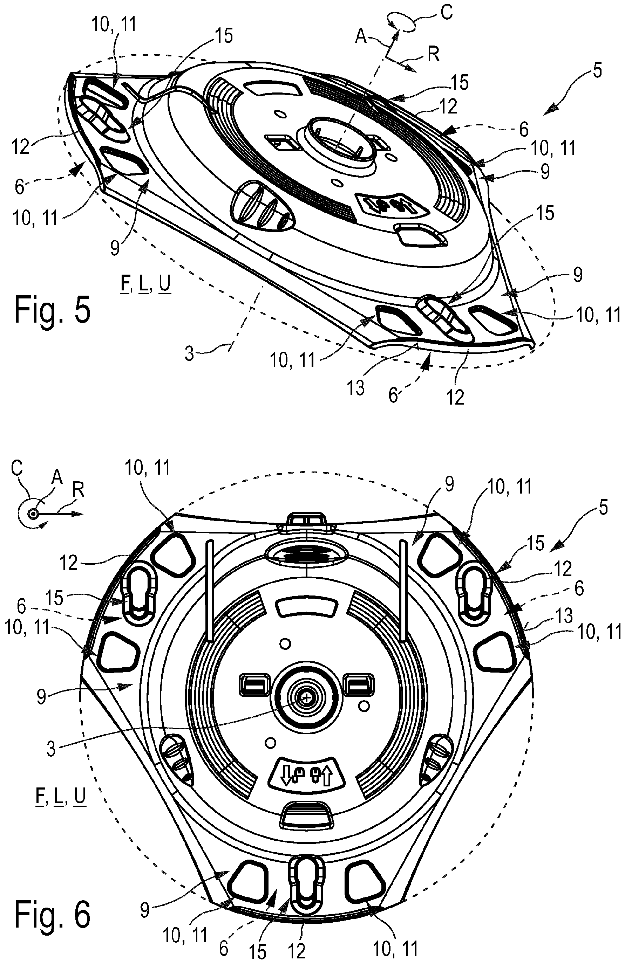

- Fig. 5: in schematischer Perspektivdarstellung eine Strömungsleiteinrichtung für das Mähwerk nach den Fig. 3 und 4,
- Fig. 6: in schematischer Draufsicht die Strömungsleiteinrichtung nach Fig. 5,

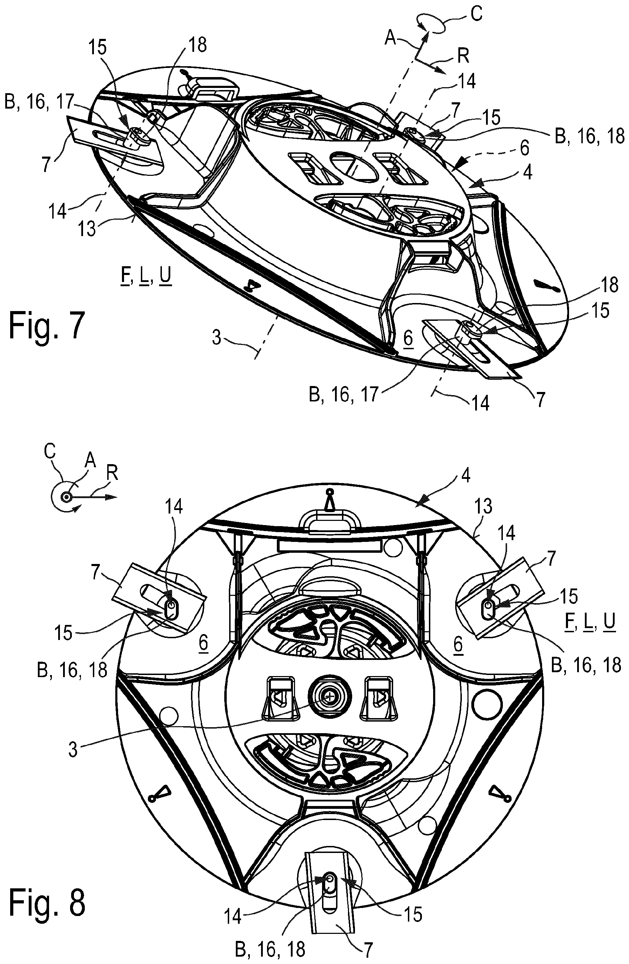

- Fig. 7: in schematischer Perspektivdarstellung das Mähwerk nach den Fig. 3 und 4 bei zur besseren Übersichtlichkeit entfernter Strömungsleiteinrichtung, und
- Fig. 8: in schematischer Draufsicht das Mähwerk nach Fig. 7.

### DETAILLIERTE BESCHREIBUNG DER AUSFÜHRUNGSBEISPIELE

Ein Mähwerk 1 ist für einen Rasenmäher 50. Der Rasenmäher 50 ist vorliegend als autonomer mobiler Rasenmähroboter ausgebildet. Das Mähwerk 1 ist alternativ oder zusätzlich für einen Freischneider 60 vorgesehen.

Das Mähwerk 1 weist einen Werkzeugträger 2 auf. Der Werkzeugträger 2 ist zur Rotation um eine Antriebsachse 3 des Mähwerks 1 ausgebildet. Die Antriebsachse 3 ist insbesondere eine zentrale Antriebsachse 3 des Mähwerks 1. Der Rasenmäher 50 und/oder der Freischneider 60 hat eine Antriebseinrichtung 70, mittels welcher der Werkzeugträger 2 um die Antriebsachse 3 drehantreibbar ist.

Im Betrieb des Rasenmähers 50 und/oder des Freischneiders 60 ist die Antriebsachse 3 beispielsweise senkrecht zu einem Untergrund erstreckt, auf welchem ein abzumähendes Schnittgut angeordnet ist. Das Schnittgut kann beispielsweise Gras W sein. Das Gras W kann einen Rasen ausbilden. Insbesondere kann das Mähwerk 1 zur, insbesondere unmittelbaren und/oder direkten, Rotation um die Antriebsachse 3 herum ausgebildet sein. Der Rasenmäher 50 kann eine weitere Antriebseinrichtung aufweisen, die zum Eigenvortrieb des Rasenmähers 50 auf und/oder relativ zu dem Untergrund ausgebildet ist.

Der Werkzeugträger 2 weist eine Trägerbasis 4 auf. Zudem weist der Werkzeugträger 2 eine Strömungsleiteinrichtung 5 auf. Die Strömungsleiteinrichtung 5 ist der Trägerbasis 4 in einer Axialrichtung A der Antriebsachse 3 gegenüberliegend angeordnet. Die Trägerbasis 4 und die Strömungsleiteinrichtung 5 können gemeinsam eine im Wesentlichen diskusförmige und/oder diskusartige äußere Formgebung des Werkzeugträgers 2 definieren.

Die Antriebsachse 3 ist insbesondere entlang ihrer Axialrichtung A axial längserstreckt. Die "Axialrichtung A" kann synonym als "axiale Richtung A" bezeichnet werden. Eine radiale Richtung R des Mähwerks 1 verläuft senkrecht zu der Axialrichtung A. Eine Umfangsrichtung C des Mähwerks 1 verläuft um die Antriebsachse 3 herum und orthogonal zu der radialen Richtung R, insbesondere innerhalb einer senkrecht zu der Axialrichtung A verlaufenden virtuellen Ebene. Die Axialrichtung A und die radiale Richtung R und die Umfangsrichtung C sind insbesondere voneinander linear unabhängig.

Der Werkzeugträger 2 weist wenigstens einen Hohlraum 6 auf. Die Trägerbasis 4 und die Strömungsleiteinrichtung 5 bilden den wenigstens einen Hohlraum 6 gemeinsam aus. Der Hohlraum 6 kann also mittels der Trägerbasis 4 und mittels der Strömungsleiteinrichtung 5 definiert und/oder zumindest teilweise begrenzt sein.

Die Strömungsleiteinrichtung 5 und die Trägerbasis 4 bilden den Hohlraum 6 derart aus, dass bei Rotation des Werkzeugträgers 2 um die Antriebsachse 3 ein Teil eines den Werkzeugträger 2 umgebenden Umgebungsfluides F durch den Hohlraum 6 hindurchströmt. Mit anderen Worten: Der Hohlraum 6 ist mittels der Strömungsleiteinrichtung 5 und mittels der Trägerbasis 4 derart gebildet, dass infolge der Rotation des Werkzeugträgers 2 um die Antriebsachse 3 Umgebungsfluid F durch den Hohlraum 6 hindurchströmt. Die Rotation des Werkzeugträgers 2 um die Antriebsachse 3 kann also eine Strömung von Umgebungsfluid F durch den Hohlraum 6 hindurch erzeugen.

Das Umgebungsfluid F kann Luft L oder ein Gemisch mit Luft L und mit Flüssigkeit sein. Vorliegend ist das Umgebungsfluid F Luft L aus einer Umgebung U des Mähwerks 1.

Beispielsweise ist der Hohlraum 6 derart geöffnet, dass - bei Rotation des Werkzeugträgers 2 um die Antriebsachse 3 - Umgebungsfluid F aus dem Hohlraum 6 herausströmt. Vorliegend ist der Hohlraum 6 radial geöffnet, um bei Rotation des Werkzeugträgers 2 um die Antriebachse 3 Umgebungsfluid F radial aus dem Hohlraum 6 hinauszuführen.

Das Mähwerk 1 weist wenigstens eine Lagerstelle B auf, die zur Lagerung einer Werkzeugeinrichtung 7 ausgebildet ist. Die Lagerstelle B ist zumindest teilweise, insbesondere vollständig, innerhalb des Hohlraums 6 angeordnet. An der Lagerstelle B ist die Werkzeugeinrichtung 7 also lagerbar und vorliegend gelagert. Die Werkzeugeinrichtung 7 ist insbesondere lösbar an dem Werkzeugträger 2 lagerbar, insbesondere werkzeugfrei und/oder zerstörungsfrei. Die Werkzeugeinrichtung 7 kann, muss aber nicht, Bestandteil des Mähwerks 1 sein.

Die Werkzeugeinrichtung 7 kann radial aus dem Hohlraum 6 herausragen. Vorliegend ragt die Werkzeugeinrichtung 7 aus dem jeweiligen Hohlraum 6 durch eine radiale Öffnung heraus, durch welche Öffnung auch das Umgebungsfluid F bei Rotation des Werkzeugträgers 2 um die Antriebsachse 3 aus dem Hohlraum 6 herausströmt. Die Werkzeugeinrichtung 7 kann bei, insbesondere durch, Rotation des Werkzeugträgers 2 um die Antriebsachse 3 herum über einen in radialer Richtung R äußeren Rand des Werkzeugträgers 2 ragen.

Die Lagerstelle B und/oder die an der Lagerstelle B gelagerte Werkzeugeinrichtung 7 kann zur, insbesondere automatischen und/oder nicht-händischen, Selbstreinigung bei Rotation des Werkzeugträgers 2 um die Antriebsachse 3 mit dem durch den Hohlraum 6 hindurchströmenden Umgebungsfluid F umströmbar sein.

Vorliegend ist die Werkzeugeinrichtung 7 in radialem Abstand 8 zu der Antriebsachse 3 an dem Werkzeugträger 2 gelagert. Der Werkzeugträger 2 kann somit zum einen dem Lagern und/oder Tragen der Werkzeugeinrichtung 7 und zum anderen als Rotor zum Erzeugen der Strömung von Umgebungsfluid F durch den Hohlraum 6 hindurch dienen. Insofern kommt dem Werkzeugträger 2 vorliegend eine Doppelfunktion zu.

Die Werkzeugeinrichtung 7 ist vorliegend schwenkbar an dem Werkzeugträger 2 gelagert. Alternativ oder zusätzlich kann die Werkzeugeinrichtung 7 zentrifugal selbstausrichtend an dem Werkzeugträger 2 gelagert sein. Insbesondere ist die Werkzeugeinrichtung 7 um eine von der Antriebsachse 3 verschiedene und vorliegend zu der Antriebsachse 3 achsparallel verlaufende Schwenkachse 14 schwenkbar und/oder zentrifugal selbstausrichtend an dem Werkzeugträger 2 gelagert.

Die Strömungsleiteinrichtung 5 weist beispielsweise einen Flügelbereich 9 auf. Vorliegend überspannt der Flügelbereich 9 den Hohlraum 6 entlang der Umfangsrichtung C des Mähwerks 1. Der Flügelbereich 9 kann - wie vorliegend - tragflächenartig profiliert und/oder gewölbt sein.

Die Strömungsleiteinrichtung 5 kann einen glocken- und/oder topfförmigen Zentralbereich aufweisen, von welchem der Flügelbereich 9 radial nach außen absteht.

Beispielsweise weist der Flügelbereich 9 wenigstens eine Durchgangsöffnung 10 auf, wobei der Hohlraum 6 mittels der Durchgangsöffnung 10 mit der äußeren Umgebung U des Mähwerks 1 fluidleitend verbunden ist. Bei Rotation des Werkzeugträgers 2 um die Antriebsachse 3 strömt Umgebungsfluid F durch die Durchgangsöffnung 10 hindurch, insbesondere entgegen der Axialrichtung A und/oder in der Umfangsrichtung C, in den Hohlraum 6. Die Durchgangsöffnung 10 kann einen asymmetrischen oder symmetrischen Öffnungsumriss 11 aufweisen.

Der Flügelbereich 9 kann wenigstens zwei - oder wie vorliegend genau zwei - derartige Durchgangsöffnungen 10 aufweisen, die entlang der Umfangsrichtung C in einem Abstand zueinander angeordnet sind. Je nach Drehsinn der Rotation des Werkzeugträgers 2 um die Antriebsachse 3 kann somit Umgebungsfluid F durch die eine oder die andere Durchgangsöffnung 10 des jeweiligen Flügelbereichs 9 in den Hohlraum 6 hineingeführt werden. Mittels der wenigstens zwei Durchgangsöffnungen 10 kann also von dem Drehsinn der Rotation des Werkzeugträgers 2 um die Antriebsachse 3 unabhängig Umgebungsfluid F in den Hohlraum 6 hineingeführt werden.

Vorliegend sind die beiden Durchgangsöffnungen 10 des Flügelbereichs 9 bezogen auf eine die Antriebsachse 3 enthaltende Symmetrieebene S des Flügelbereichs 9 im Wesentlichen spiegelsymmetrisch zueinander ausgebildet. Vorliegend weisen alle Durchgangsöffnungen 10 jeweils einen asymmetrischen Öffnungsumriss 11 auf.

Die Werkzeugeinrichtung 7 kann innerhalb des Hohlraums 6 entlang der Umfangsrichtung C des Mähwerks 1 im Abstand zu wenigstens einer, insbesondere zu allen, diesen Hohlraum 6, insbesondere axial, nach außen öffnenden Durchgangsöffnung 10 an dem Werkzeughalter 2 gelagert sein.

Der Flügelbereich 9 der Strömungsleiteinrichtung 5 weist beispielsweise eine entlang der Umfangsrichtung C des Mähwerks 1 erstreckte Leitfinne 12 auf. Mittels der Leitfinne 12 wird das Umgebungsfluid F bei Rotation des Werkzeugträgers 2 um die Antriebsachse 3 radial geleitet. Insbesondere kann die Leitfinne 12 eine Strömung von Umgebungsfluid F radial leiten, so dass die Strömung an der Leitfinne 12 der Umfangsrichtung C folgt. Die Leitfinne 12 steht vorliegend von dem Hohlraum 6 weg weisend axial ab. Beispielsweise ist die Leitfinne 12 an einem Außenumfang 13 der Strömungsleiteinrichtung 5 angeordnet. Vorliegend ist die Leitfinne 12 direkt an dem Außenumfang 13 angeordnet. Der Außenumfang 13 kann wenigstens oder nur bereichsweise einer Kreisbahn folgen.

Vorliegend ist der Hohlraum 6 der Strömungsleiteinrichtung 5 axial gegenüberliegend mittels der Trägerbasis 4 im Wesentlichen fluidundurchlässig begrenzt. Bei nicht gezeigten Ausführungsformen kann der Hohlraum 6 aber auch axial zumindest bereichsweise fluiddurchlässig begrenzt und/oder offen sein.

Vorliegend ist die Trägerbasis 4 zumindest in ihrem den Hohlraum 6 direkt begrenzenden Bereich im Wesentlichen eben ausgebildet. Es ist alternativ denkbar, zumindest den den Hohlraum 6 direkt begrenzenden Bereich der Trägerbasis 4 tragflächenartig profiliert und/oder gewölbt auszubilden, insbesondere komplementär oder korrespondierend zu einem axial benachbarten Flügelbereich 9.

Die Trägerbasis 4 kann eine unterbrechungsfreie kreisförmige Außenkontur aufweisen. Demgegenüber kann der Außenumfang 13 der Strömungsleiteinrichtung 5, insbesondere nur, segmentweise entlang der kreisförmigen Außenkontur ausgebildet sein.

Der Werkzeugträger 2 weist vorliegend wenigstens eine Befestigungseinrichtung 15 auf, die zur lösbaren axial formschlüssigen Befestigung der Strömungsleiteinrichtung 5 an der Trägerbasis 4 ausgebildet ist. Dabei ist die Trägerbasis 4 und/oder die Strömungsleiteinrichtung 5 relativ zu der Befestigungseinrichtung 15 radial versetzbar, um die axial formschlüssige Befestigung zu lösen. Die Befestigungseinrichtung 15 weist dabei vorliegend eine Lagereinrichtung 16 des Werkzeugträgers 2 auf, welche Lagereinrichtung 16 zum Lagern der Werkzeugeinrichtung 7 dient.

Beispielsweise hat die Lagereinrichtung 16 einen Lagerbolzenabschnitt 17 zum Lagern der Werkzeugeinrichtung 7 sowie einen radial von dem Lagerbolzenabschnitt 17 abstehenden Formschlussabschnitt 18. Der Formschlussabschnitt 18 ist für die lösbare axial formschlüssige Befestigung der Strömungsleiteinrichtung 5 an der Trägerbasis 4 ausgebildet.

Das Mähwerk 1 kann zwei oder mehr - insbesondere wie vorliegend genau drei - Hohlräume 6 aufweisen, die entlang der Umfangsrichtung C äquidistant zueinander angeordnet sind.

Je Hohlraum 6 ist vorliegend eine Lagerstelle B für jeweils eine Werkzeugeinrichtung 7 vorhanden. Vorliegend sind also drei Lagerstellen B für drei Werkzeugeinrichtungen 7 vorhanden. Die Lagerstellen B sind vorliegend entlang der Umfangsrichtung C des Mähwerks 1 in einem Abstand zueinander angeordnet. Beispielsweise sind die Lagerstellen B entlang der Umfangsrichtung C äquidistant zueinander angeordnet.

Je Lagerstelle B ist vorliegend eine separate Lagereinrichtung 16 vorhanden. Alternativ oder zusätzlich ist jeder Lagerstelle B ist ein separater Hohlraum 6 zugeordnet.

Je Hohlraum 6 ist vorliegend ein separater Flügelbereich 9 vorhanden. Beispielsweise ist jeder Hohlraum 6 mittels jeweils wenigstens einer Durchgangsöffnung 10 des zugehörigen Flügelbereichs 9, vorliegend jeweils mittels zwei Durchgangsöffnungen 10 des zugehörigen Flügelbereichs 9, fluidleitend mit der Umgebung U des Mähwerks 1 verbunden.

## Patentansprüche

1. Mähwerk (1) für einen Rasenmäher (50) und/oder für einen Freischneider (60), wobei das Mähwerk (1) aufweist:
- einen Werkzeugträger (2), der zur Rotation um eine Antriebsachse (3) des Mähwerks (1) ausgebildet ist und der eine Trägerbasis (4) sowie eine der Trägerbasis (4) in einer Axialrichtung (A) der Antriebsachse (3) gegenüberliegende Strömungsleiteinrichtung (5) aufweist, wobei die Trägerbasis (4) und die Strömungsleiteinrichtung (5) gemeinsam wenigstens einen Hohlraum (6) des Werkzeugträgers (2) bilden, wobei bei Rotation des Werkzeugträgers (2) um die Antriebsachse (3) ein Teil eines den Werkzeugträger (2) umgebenden Umgebungsfluides (F) durch den Hohlraum (6) hindurch strömt,
- wenigstens eine Lagerstelle (B), die zur Lagerung einer Werkzeugeinrichtung (7) ausgebildet und zumindest teilweise innerhalb des Hohlraums (6) angeordnet ist.

2. Mähwerk (1) nach dem vorhergehenden Anspruch,
- wobei die Strömungsleiteinrichtung (5) einen den, insbesondere jeweiligen, Hohlraum (6) entlang einer Umfangsrichtung (C) des Mähwerks (1) überspannenden, insbesondere tragflächenartig profilierten und/oder gewölbten, Flügelbereich (9) aufweist.

3. Mähwerk (1) nach einem der vorhergehenden Ansprüche,
- wobei wenigstens ein Flügelbereich (9) der Strömungsleiteinrichtung (5) wenigstens eine Durchgangsöffnung (10) aufweist,
- wobei der Hohlraum (6) mittels der Durchgangsöffnung (10) derart mit einer äußeren Umgebung (U) des Mähwerks (1) fluidleitend kommuniziert, dass - bei Rotation des Werkzeugträgers (2) um die Antriebsachse (3) - Umgebungsfluid (F) durch die Durchgangsöffnung (10) hindurch in den Hohlraum (6) hineinströmt.

4. Mähwerk (1) nach dem vorhergehenden Anspruch,
- wobei der Flügelbereich (9) wenigstens zwei Durchgangsöffnungen (10) aufweist, die entlang der Umfangsrichtung (C) in einem Abstand zueinander angeordnet sind, um - von einem Drehsinn der Rotation des Werkzeugträgers (2) um die Antriebsachse (3) unabhängig - Umgebungsfluid (F) in den Hohlraum (6) hineinzuführen.

5. Mähwerk (1) nach einem der vorhergehenden Ansprüche,
- wobei der Hohlraum (6) derart geöffnet ist, dass - bei Rotation des Werkzeugträgers (2) um die Antriebsachse (3) - Umgebungsfluid (F) aus dem Hohlraum (6) herausströmt; und/oder
- wobei die Werkzeugeinrichtung (7) radial aus dem Hohlraum (6) herausragt.

6. Mähwerk (1) nach einem der vorhergehenden Ansprüche,
- wobei wenigstens ein Flügelbereich (9) der Strömungsleiteinrichtung (5) eine entlang einer Umfangsrichtung (C) des Mähwerks (1) erstreckte Leitfinne (12) zum radialen Leiten von Umgebungsfluid (F) aufweist,
- insbesondere wobei die Leitfinne (12) an einem Außenumfang (13) der Strömungsleiteinrichtung (5) angeordnet ist.

7. Mähwerk (1) nach einem der vorhergehenden Ansprüche,
- wobei die Werkzeugeinrichtung (7), insbesondere um eine von der Antriebsachse (3) verschiedene und/oder zu der Antriebsachse (3) achsparallel verlaufende Schwenkachse (14), schwenkbar und/oder zentrifugal selbstausrichtend an dem Werkzeugträger (2) lagerbar oder gelagert ist.

8. Mähwerk (1) nach einem der vorhergehenden Ansprüche,
- wobei das Mähwerk (1) zwei oder mehr, insbesondere drei, Lagerstellen (B) aufweist, die entlang einer Umfangsrichtung (C) des Mähwerks (1), insbesondere äquidistant, in einem Abstand zueinander angeordnet sind, um jeweils eine Werkzeugeinrichtung (7) an dem Werkzeugträger (2) zu lagern,
- insbesondere wobei das Mähwerk (1) je Lagerstelle (B) einen separaten Hohlraum (6) aufweist.

9. Rasenmäher (50) und/oder Freischneider (60), aufweisend:
- ein Mähwerk (1) nach einem der vorhergehenden Ansprüche, und
- eine Antriebseinrichtung (70) zum Rotieren des Werkzeugträgers (2) um die Antriebsachse (3).
